# EUROPEAN PATENT APPLICATION

(11) **EP 1 959 363 A2**
(43) Date of publication of application: **20.08.2008**
(21) Application number: 08250541.3
(22) Date of filing: 15.02.2008
(51) Int. Cl.: G06F 17/30

(54) **Network device and network system**

(30) Priority: 16.02.2007 JP 2007036472; 28.03.2007 JP 2007083435; 28.03.2007 JP 2007083436
(71) Applicant: Brother Kogyo Kabushiki Kaisha, Nagoya-shi, Aichi-ken 467-8561 (JP)
(72) Inventor: Ohara, Kiyotaka c/o Intellectual Property Dept., Aichi-Ken 467-8562 (JP); Sasaki Hiroyuki c/o Intellectual Property Dept., Aichi-Ken 467-8562 (JP)
(74) Representative: Smith, Samuel Leonard

(57) **Abstract**

A network device and a network system are disclosed. The network device (100) includes a storage (120), a transmitter (122a), a receiver (122a) and a controller (122b). The storage has stored therein the information (124) of the file store region linked to the function executed by the device. The transmitter sends the information of the file store region to a terminal (150) based on a file sharing protocol. The receiver receives a configuration file and a store command from the terminal (150) based on the file sharing protocol. The configuration file contains the description of the operating conditions of the function and can be directly rewritten by the user. Also, the store command designates a file store region and requests the device (100) to store the configuration file in the designated file store region. The controller (122b), in response to the reception of the store command, executes the function linked to the file store region under the operating conditions described in the configuration file. The user can describe the desired operating conditions by rewriting the configuration file in text form directly as desired. The user can easily cause the device to operate under the desired operating conditions. This device has a high operability for the user of the terminal controlling the device.

## Description

The technique disclosed by this specification relates to a network device capable of being controlled from a terminal through a network.
The "network device" as called in this specification is defined as, for example, a printer, a scanner, a facsimile, a copier or a multi-function apparatus as an integration of these devices ,which can perform one or plural functions (print function, scanning function, etc.) capable of being controlled from a terminal computer through a network.

A network device which can be controlled from a terminal through a network based on a file sharing protocol (such as WebDAV (Web Distributed Authoring and Versioning Protocol)) is known. Japanese Patent Application Publication No. 2002-373064, for example, discloses a printer controllable from a terminal with communication based on the WebDAV protocol. The printer sends the information including the name of the file store folder assigned in the storage as a data in XML format in response to reception of a command (sometimes referred to as a "request") transmitted from a terminal installing the WebDAV client function. In the terminal, the file store folder is displayed on the screen as a Web folder based on the received data in XML format.
The user moves (by drag and drop) the icon of the document file desired for printing to the icon of the store folder on the screen of the terminal. Then, the document file is transmitted to the printer based on the file sharing protocol. The printer prints the received document file. The user can thus print the document file on the printer simply by moving the icon of the document file displayed on the screen of the terminal.
This printer, in executing the print functions, can receive the document file containing the information on the printing conditions (operating conditions) designated by the user. The printer extracts the printing conditions contained in the received document file, and executes the print functions under the printing conditions thus received. The printing conditions, for example, include the setting of the paper size and the margin. The user sets the printing conditions using a user interface installed in the terminal.

The conventional printer as described above is not easy to operate from a terminal in some respects.
Although the printer described above can receive the document file containing the printing conditions, the printing conditions cannot be designated easily. The printer prints the document contained in the received document file under the printing conditions contained in the document file. The document file containing both the documents and the printing conditions is described in a special format. The operating conditions contained in such a document file, therefore, cannot be easily rewritten directly by the user. Also, in executing the printing functions, the user is required to transmit the desired document file to the printer. The document file transmitted to the printer for execution of the printing functions can contain the information on the printing conditions. There are devices such as the scanner other than the printer, however, which require no transmission of a file for executing the function. The operating conditions for executing these functions are required to be set by the user using a separate specialized user interface (hereinafter referred to as the specialized UI).
In the case where various operating conditions can be set, it is bothersome for the user to designate the desired operating conditions using the specialized UI. Before displaying the screen for setting the desired conditions, for example, the buttons on the screen prepared by the specialized UI may be clicked a number of times.
The object of this invention is to provide a network device easy to operate by a user from a terminal.

The network device disclosed in this specification can be controlled from a terminal through a network. The network device includes a storage, a transmitter, a receiver and a controller. The storage has stored therein the information of the file store region linked to the function executable by the device. The transmitter transmits the information of the file storage region to the terminal based on the file sharing protocol. The receiver receives a configuration file and a store command transmitted from the terminal based on the file sharing protocol. The configuration file describes the operating conditions of the function and can be rewritten by the user directly. Also, the store command designates a file store region and requests the device to store the configuration file in the designated file store region. In the controller, the function linked to the file store region is executed in response to the reception of the store command under the operating conditions described in the configuration file.
The term "function" is defined as the printing function in the case where the network device is a printer, and an image reading function (or "scanning function") in the case where the network device is a scanner. The "function" also includes the copying function and facsimile function. In general, the "function" is the one related to the image.
The "file store region" may be typically a "folder" specified by a certain OS (Operating System). The file rewritable directly by the user may be typically a text file.
The storage may be a hard disk drive or a memory. The transmitter, the receiver and the controller may be realized either by hardware or by a program executed by the computer mounted on the network device.

In the description that follows, the "network device" may be called simply the "device".
The device, in response to reception of a file store command that require the device to store in the designated file storage folder, recognizes that the file sent together with the file store command describes the operating conditions in text format. The file describing the operating conditions is referred to as the "configuration file". The device reads the operating conditions described in the text file (the configuration file) and sets the operating conditions of the function linked to the designated file store folder. Then, the device executes the function linked to the designated file store folder under the operating conditions thus set.
The user can describe the desired operating conditions by freely rewriting the configuration file of text format directly. The user can operate the device under the desired conditions in a simple manner. This device has a high operability for the user controlling the device through the terminal.

The preferred technical features disclosed in the present application will be described below.
The configuration file can be rewritten directly by the user. Therefore, the operating conditions described in the configuration file may have an error. An example of the error is a typing error. With the configuration file containing an error, the device may not execute the function. In other words, the operating conditions containing an error fail to suit (or fail to be adapted) for the operating conditions required by the device function. In the case where the operating conditions described in the received configuration file fail to be adapted for the function linked to the designated file store region, the controller of the device may transmit a message that indicates the error in the received configuration file to the terminal. The user can be immediately informed of the error that has occurred at the time of rewriting the configuration file.

The configuration file may describe the information on the result store region. In this case, the controller may store the result of executing the function linked to the designated file store region in the result store region described in the received configuration file. As a result, the result of execution of the function by the device is automatically stored in the result store region desired by the user. The result store region is also typically a folder.

The storage of the device may store an initial configuration file describing the default operating conditions. In the process, the transmitter may transmit the initial configuration file to the terminal in response to reception of a request transmitted from the terminal. The "default operating conditions" may be rewritten as the "predetermined operating conditions".
The initial configuration file may or may not be rewritable directly by the user.
In the case where the initial configuration file can be directly rewritable, the user can easily create a configuration file describing the desired operating conditions by rewriting the particular initial configuration file. In the case where the initial configuration file may not be rewritable (such as a read-only file), on the other hand, the user can easily create a configuration file describing the desired operating conditions by copying the initial configuration file and rewriting the copy file. The initial condition file may be use as a template for describing the desired operating conditions. The user is not required to create the configuration file without any templates.
With this device, the user can easily designate the same operating conditions as those used in the past at the time of instructing the device to execute the function.

The device controller may hold in the backup file the operating conditions described in the received configuration file. The controller may transmit the backup file to the terminal in response to a request from the terminal.
The user, by use of the backup file, can execute the function again under the same operating conditions as described in the configuration file. In this way, the operating conditions set in the past can be effectively utilized. The user, whenever desirous of causing the device to execute a specific function, can easily designate the operating conditions used in the past.
The backup file may be either the received configuration file or another file than the received configuration file.

The device storage may store the default operating conditions. The controller may execute the function under the operating conditions described in the received configuration file and the default operating conditions corresponding to the operating conditions item not contained in the received configuration file. The controller may hold, in the backup file, both the operating condition described in the received configuration file and the default operating conditions used for executing the function.
The operating conditions to be set may include plural operating condition items. It is bothersome for the user to designate all the plural operating condition items. In the case where the technical features described above are employed, however, the user is not required to describe all of the operating conditions in the configuration with regard to the satisfactory items of the default operating conditions. Thus, the burden on the user to create the configuration file is reduced.
On the other hand, the default operating conditions stored in the storage may be changed. By employing the aforementioned technical features, however, the operating conditions described in the received configuration file are held by the controller together with the default operating conditions used for execution of the function. In this way, all the operating conditions can be held for execution of the function by supplementing the default operating conditions for the items for which no operating conditions are described in the configuration file. Even in the case where the default operating conditions are changed, the same operating conditions as those for the past execution of the function can be easily designated by using the file held by the controller.

The function executed by the device may be the image output function for outputting the image data. The image output function may be, for example, the copying function (temporarily storing the image data of the original), the printer function and the image read function (or scanning function). In this case, the controller may save the operating conditions and the output image data in one backup file.

The image data saved with the operating conditions can used as a sample image of the result of execution based on the saved operating conditions. The user, by viewing the sample image, can confirm the status of the function execution result based on the saved operating conditions, before re-designating the saved operating conditions.

The controller, in response to the user instruction, may switch between the operation of saving the operating conditions and the image data in one backup file and the operation of saving the operating conditions and the image data individually in different files. In redesignating the saved operating conditions, the image data saved with the operating conditions need not be updated with the output result of the image data output function newly executed. Also, the saved image data as a sample are not required to be changed.

The device may have the following technical features:
(a) The storage has stored therein the information of the second file store region linked to the process of controlling the function executable by the device.
(b) The transmitter transmits the information of the second file store region to the terminal based on the file sharing protocol.
(c) The receiver receives the access command from the terminal based on the file sharing protocol. The access command designates the second file store region and requests the device to access the designated second file store region.
(d) The controller controls the function under execution based on the process linked to the designated second file store region.
   The second store region may typically be a folder.
   The following requests (the requests may referred to as "commands") are defined in WebDAV (a kind of the file sharing protocol) standard;
   - PUT request (file store command) that designates a file and a folder (file store region). PUT request is a command that requests the device to store a designated file in a designated folder.
   - GET request (GET command) that designates a file and a folder. GET request is a command that requests the device to copy the designated file from the designated folder.
   - PROPFIND request (PROPFIND command) that designates a file or a folder. PROPFIND request is a command that requests the device to transmit the property information of the designated folder.
      These commands designate a specified file and/or folder and request the device to execute a predetermined process for the designated file and/or folder. These commands are collectively called an access command.
      The process linked to the second file store region may be one of the processes of; pausing the function being executed by the device, the process of restarting the paused function and the process of stopping the function under execution.
      The second file store region may be assigned to the storage of the device.

In the device described above, the information of the second file store region (second folder) in store is transmitted to the terminal. As a result, an icon indicating the second folder assigned to the storage of the device (second folder icon) is displayed on the screen of the terminal. When the user of the terminal clicks the second folder icon twice (so-called "double-click"), the PROPFIND request (one of the access commands) designating the second folder is transmitted to the device. In the device, the process for controlling the function is linked to the second folder. The device controls the function under execution, based on the process linked to the second folder designated by the received access command. The user can control the device, in the same manner as if to operate the file or the folder on the screen, to pause the function under execution or restart the paused function.
The storage has stored therein the information of plural second file store regions, and a different process for controlling the function may be linked to each second file.
By assigning plural second folders (second file store regions) of the storage of the device and linking the each process of controlling the function to each second folder, the user of the terminal can easily control the function in the same manner as if to operate the folder on the screen. Especially, the great advantage is that the process of pausing the printing function and other functions being executed by the device can be easily controlled from the terminal.

The second folder (second file store region) may carry the name indicating the process linked thereto. The user of the terminal that has acquired the property information of the second folder, in accordance with the name of each folder, can distinguish the control process linked to each folder.
In the conventional printer (network device) controlled from a terminal through a network, an instruction is given to pause or cancel the printing function by use of the specialized UI installed in the terminal. In the technique disclosed by this specification, in contrast, the concept of the file or folder operation on the screen is linked to the operation to control the device function thereby to simplify the device control operation. The device requires no specialized UI for control. The device can be easily controlled at low cost in this way by using the file sharing protocol.

This specification also discloses a novel technique for an information processing system including a network device connected to a network and a terminal for controlling the network device through the network. The terminal of the information processing system may include:
- A storage that stores a configuration file which is directly rewritable by the user and describes the operating conditions of the function executable by the device.
- An icon display means that displays, on the screen, a device icon indicating the device and a configuration file icon indicating the configuration file in store.
- A transmitter that, once the user associates the configuration file icon to the device icon on the screen, transmits the configuration file indicated by the configuration file icon to the device indicated by the device icon, based on the file sharing protocol.
- An error display means that displays an error message transmitted by the device in the case where the device detects an error in the configuration file.
   The network device may include:

- A receiver that receives the configuration file transmitted from the terminal.
- A judging means that judges whether the operating conditions described in the received configuration file suit the network device.
- A controller that, in the case where the operating conditions suit the network device, executes the function with the operating conditions in the received configuration file. In the case where the operating conditions fail to suit the network device, on the other hand, the controller transmits an error message indicating the error in the configuration file to the terminal.
   The user operation of associating the configuration file icon with the device icon typically may be the operation of moving (or "drag and drop") the configuration file icon onto the device icon on the screen.
   With this system, the user for controlling the device only have to associates the configuration file icon to the device icon after rewriting the operating conditions described in the configuration file to the desired operating conditions. The user can thus control the device from the terminal with a simple operation.
   The network system described above may be reworded as the method for controlling a network device executable of a function from a terminal through the network.

Fig. 1 is a block diagram showing a multi-fimction apparatus (network device).
Fig. 2 shows an example of the screen display at a terminal.
Fig. 3 shows another example of the screen display at a terminal.
Fig. 4 is a flowchart showing the main process of the multi-function apparatus.
Fig. 5 is a flowchart showing the folder property information transmission process.
Fig. 6 is a flowchart showing the DefaultCopyParam.txt file transmission process.
Fig. 7 is a flowchart showing the Copy process.
Fig. 8 is a flowchart showing the Scan process.
Fig. 9 shows an example of the screen display at a terminal.
Fig 10 shows an example of the initial configuration file.
Fig. 11 shows an example of the screen display at a terminal according to a second embodiment.
Fig. 12 is a flowchart showing the scan process according to the second embodiment.
Fig. 13 is a flowchart showing the parameter setting process.
Fig. 14 is a flowchart showing the output process.
Fig. 15 shows an example of the backup file.
Fig. 16 shows an example of the hierarchical structure of the folder assigned to the storage.
Fig. 17 is a flowchart showing the main process of the multi-function apparatus according to a third embodiment.
Fig. 18 is a flowchart showing the scan process of the multi-function apparatus according to the third embodiment.
Fig. 19 shows an example of the screen display at a terminal according to the third embodiment.

### (FIRST EMBODIMENT)

A first embodiment is explained below with reference to the drawings. The device according to this embodiment is a multi-function apparatus 100 capable of executing the printing function, the scanning function, the copying function and the facsimile function. In the description that follows, the multi-function apparatus 100 is referred to simply as the "MFA 100".

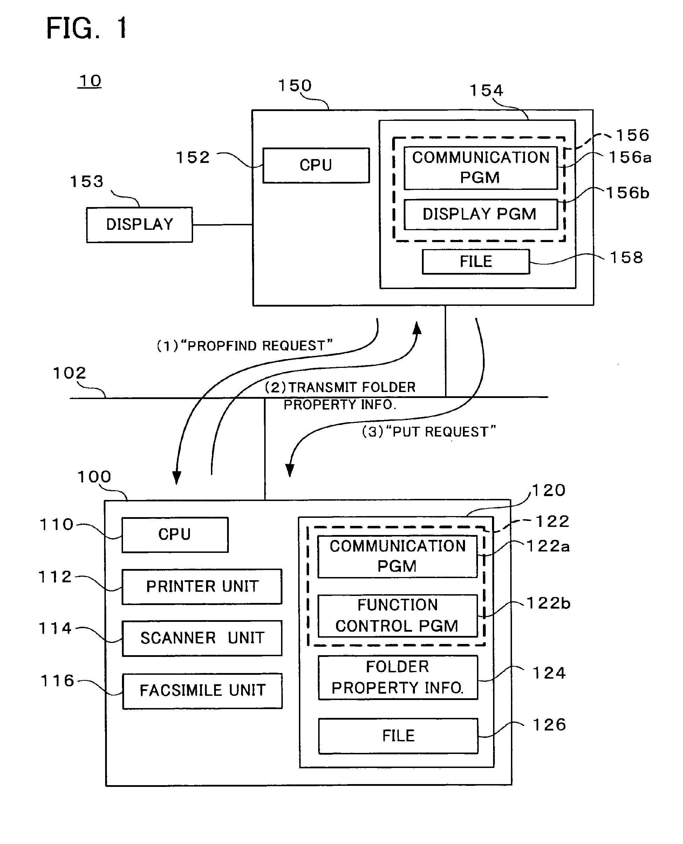

Fig. 1 shows a block diagram of the MFA 100. The MFA 100 is connected to a network 102. A terminal 150 is also connected to the network 102. The MFA 100 can communicate with a terminal 150 through the network 102. The MFA 100 and the terminal 150 make up a network system 10.
The MFA 100 includes a CPU 110, a printer unit 112, a scanner unit 114, a facsimile unit 116 and a storage 120.
The printer unit 112 is for printing a document and/or an image. The scanner unit 114 is for reading a character and/or an image printed on a sheet. The facsimile unit 116 is for transmitting/receiving the data through a telephone line (not shown).
The MFA 100 can print, by the printer unit 112, the data of the document file or the image file sent from the terminal 150. The MFA 100, by the printer unit 112, can also print the data read by the scanner unit 114 and the data received by the facsimile unit 116.
The MFA 100 can transmit, to the other device having a predetermined telephone number by the facsimile unit 116, the data of the document file and the image file sent from the terminal 150 or the data read by the scanner unit 114.
The printer unit 112, the scanner unit 114 and the facsimile unit 116 are controlled by a CPU 110. The operating conditions of the printer unit 112, the scanner unit 114 and the facsimile unit 116 are each changeable. The operating conditions are, for example, the paper size for the printer unit 112, the resolution of the image to be read, for the scanner unit 114, and the resolution of the data transmitted/received for the facsimile unit 116. The operating conditions of the printer unit 112, etc. can be changed by the CPU 110.
The storage 120 stores therein programs 122, folder property information 124 and a file 126.
The CPU 110 executes various processes in accordance with the programs 122 stored in the storage 120. The programs 122 include a communication program 122a and a function control program 122b. The communication program 122a is for transmitting/receiving the data to/from the terminal 150. The function control program 122b is for controlling the printer unit 112, etc. In Fig. 1, "PGM" indicates a "program", and "INFO." indicates "information".

The file 126 and the folder property information 124 (information of the file store region) stored in the storage 120 are explained below.
The file 126 includes various electronic files stored in the MFA 100. For example, the MFA 100 has an initial configuration file that describes the initialization of the operating conditions of the printer unit 112, the scanner unit 114 and the facsimile unit 116. The initialization of the operating conditions of the scanning function (the function of reading the image by actuating the scanner unit 114), for example, is described in the initial configuration file named "DefaultScanParam.txt".
Also, as described above, the MFA 100 can print, directly through the printer unit 112, the data read by the scanner unit 114. This function is called the copying function. The MFA 100 has also stored therein a file describing the initialization for executing the copying function. The initialization of the operating conditions of the copying function is described in the file named DefaultCopyParam.txt. DefaultScanParam.txt and DefaultCopyParam.txt are files in text form as indicated by the file extension "txt", and can be rewritten directly by the user, respectively.
The folder property information 124 (the information of the file store region) is the data for managing the file store region of the storage 120 hierarchically. The "property" may also be called the "attribute." Several folders (file store regions) are assigned in the storage 120 of the MFA 100. The folder property information 124 has recorded therein the hierarchical relation between the folders and the information on the file stored in each folder. The storage 120 according to this embodiment has a folder named ScanStart and a folder named CopyStart. Several other folders are also assigned but not described herein.

Next, the terminal 150 is explained. The terminal 150 is an ordinary personal computer. This terminal 150 includes a CPU 152, a storage 154 and a display 153. The storage 154 stores therein programs 156 and a file 158. The CPU 152 executes various processes based on the programs 156. The programs 156 include a communication program 156a and a display program 156b. The communication program 156a is for transmitting/receiving the data to/from the MFA 100. The display program 156b is for displaying the information of the file and/or the folder and an error message received from the MFA 100.

The MFA 100 and the terminal 150 can communicate with each other based on the file sharing program in accordance with the communication program 122a of the MFA 100 and the communication program 156a of the terminal 150. The file sharing protocol, for example, WebDAV (Web-based Distributed Authoring and Versioning) may be employed.
Several commands (which may be referred to as "requests") for transmitting/receiving data between the terminals are defined in the file sharing protocol standard. The PROPFIND command (PROPFIND request), the GET command (GET request) and the PUT command (PUT request), for example, are defined in WebDAV. In this specification, the term "request" and the term "command" have the same meaning. The PROPFIND request, the GET request and the PUT request are defined in the WebDAV standard and therefore not described in detail.
The MFA 100 and the terminal 150, by transmitting and receiving these "requests," can transmit and receive the folder property information and/or the files.

The "requests" and the data communicated between the MFA 100 and the terminal 150 are specifically explained with reference to Fig. 1.
First, the PROPFIND request is explained. The PROPFIND request designates a specific folder. The PROPFIND request is a command for requesting the other terminal on the network (the other terminal includes device) to transmit the property information of the designated folder. The property information may include; the name of the folder, the file contained in the folder, and the hierarchical structure of the folder.
The terminal 150 transmits the PROPFIND request to the MFA 100 (shown by (1) in Fig. 1). The MFA 100 that has received this request transmits the folder property information 124 stored in the storage 120 to the terminal 150 (shown by (2) in Fig. 1). The terminal 150 that has received the folder property information 124 displays the folder of the MFA 100 on the screen of the display 153.
Next, the PUT request (file store command) is explained.
The PUT request designates a specific folder and a specific file. The contents of the designated file may be transmitted with the PUT request. The PUT request is a command which, designating a specific folder and a specific file, requests the other terminal to store the designated file in the designated folder.
The terminal 150 transmits the PUT request designating a predetermined file and a predetermined folder to the MFA 100 (shown by (3) in Fig. 1). The MFA 100 that has received this request stores the designated file in the designated folder. In the MFA 100, the function executable by the MFA 100 is linked to a specified folder in advance. In the case where the PUT request transmitted by the terminal 150 designates a specific folder and a specific file as predetermined, the MFA 100 not only stores the designated file in the designated folder but also executes the functions (for example, the printing function and the image scanning function) linked to the designated folder. Specifically, the MFA 100 executes a specified function linked to the specified folder, in response to reception of a PUT request designating a specific file and a specific folder. This point is explained in more detail later.
Next, the GET request is explained. The GET request designates a specific folder and a specific file. The GET request is a command that requests the other terminal to transmit a designated file in a designated folder.
The terminal 150 transmits the GET request designating a specific file name to the MFA 100. The MFA 100 that has received this request transmits the designated file to the terminal 150.
The "PROPFIND request", the "PUT request" and the "GET request" can also be restated collectively as a command that designates a folder and requests the other terminal to access to a designated folder. These "requests" may be collectively called an "access command".

The process in which the user operates the terminal 150 and causes the MFA 100 to execute the desired function is briefly explained. In order to execute the desired function by the MFA 100, the operating conditions of the desired function has to designate to the MFA 100. The operating conditions of the desired function are described in the file (called the configuration file) in text form. DefaultScanParam.txt and DefaultCopyParam.txt are examples of the configuration file. The user describes the operating conditions of the desired function in the configuration file. The configuration file is in text form, and therefore, the user can edit the configuration file as desired.
The user operates the terminal 150 so as to transmit a command (PUT request) that requests the MFA 100 to store the configuration file describing the desired operating conditions in a specific folder of the MFA 100. More specifically, the user associates (by drag and drop) the icon of the configuration file to the icon of a specific folder on the screen of the display 153. By this operation, the PUT request designating the configuration file and specific folder is sent to the MFA 100. In the MFA 100, the function linked to the specific folder is executed under the operating conditions described in the configuration file.
Simply by associating the icon of the configuration file to the icon of a predetermined specific folder (by drag and drop), the user of the terminal 150 can control the MFA 100 so as to execute the desired function under the desired operating conditions. The user can freely edit the configuration file, and therefore, the user can designate the desired operating conditions easily without using a specialized user interface.

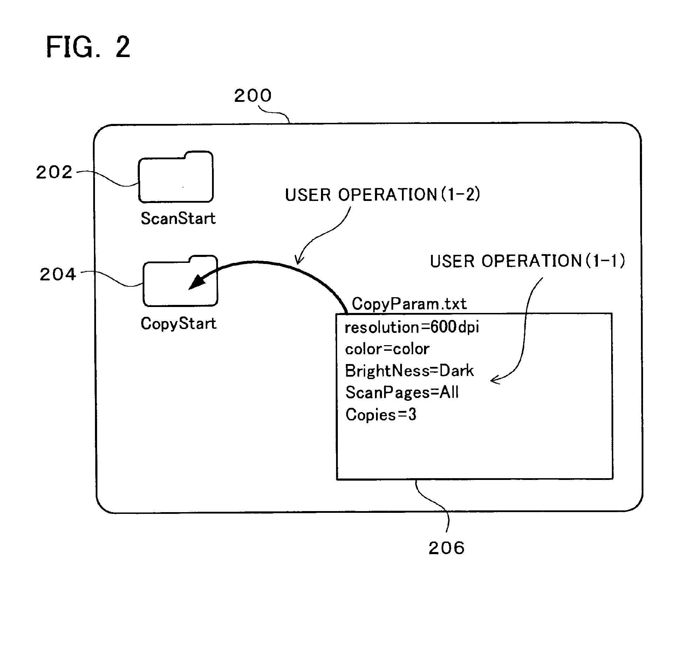

Now, an explanation is given about the user operation of the terminal 150 for controlling the MFA 100 to execute the desired function. Fig. 2 shows an example of the screen (screen 200) of the terminal 150.
Now, consider a case in which the user of the terminal 150 wants the MFA 100 to execute the copying function.
An icon 202 representing the ScanStart folder and an icon 204 representing the CopyStart folder are displayed on the screen 200. Also, the screen 200 has displayed thereon the CopyParam.txt file 206 (configuration file) opened by the text editor.
The icon 202 of the ScanStart folder and the icon 204 of the CopyStart folder are displayed on the screen 200 of the terminal 150 as the result of the MFA 100 sending the folder property information 124 in response to reception of the PROPFIND request.
The CopyParam.txt file 206 displayed on the screen 200 describes the operating conditions of the copying function of the MFA 100. The CopyParam.txt file 206 contains the operating conditions such as setting the resolution to 600 dpi.
The user, by editing (rewriting) the CopyParam.txt file 206 which is a text format file, describes the desired operating conditions (the user operation (1-1) in Fig. 2). Next, the user moves the edited CopyParam.txt file 206 (the icon representing the CopyParam.txt file) to the icon 204 of the CopyStart folder (the user operation (1-2) in Fig. 2). By these operations, the user can control the MFA 100 to execute the copying function that is linked with the CopyStart folder.
The terminal 150, in response to the user operation (1-2), sends the PUT request designating the CopyParam.txt file 206 and the CopyStart folder to the MFA 100. The MFA 100 that has received the PUT request sets the operating conditions described in the designated CopyParam.txt file 206 as own operating conditions. Then, the MFA 100 executes the copying function linked beforehand to the CopyStart folder designated. The detailed process of the MFA 100 is explained later.

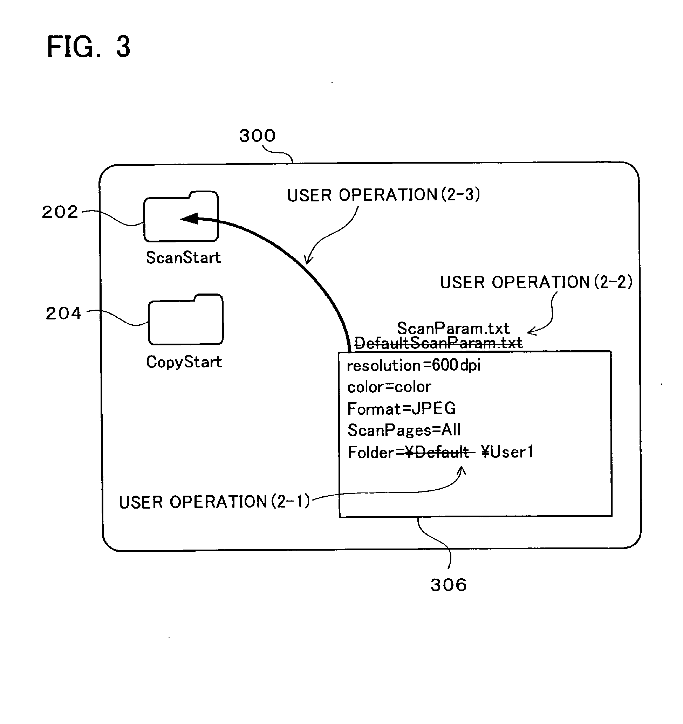

Next, an explanation is given about a case in which the user of the terminal 150 wants the MFA 100 to execute the scanning function. Fig. 3 shows another example of the screen of the terminal 150 (screen 300) for executing the scanning function.
The screen 300 displays thereon an icon 202 representing the ScanStart folder and an icon 204 representing the CopyStart folder. Also, the screen 300 displays thereon a DefaultScanParam.txt 306 opened by the text editor.
The DefaultScanParam.txt 306, as described above, is stored in the MFA 100 as one of the initial configuration files in advance. This file describes the initialization of the operating conditions of the scanning function. The user, by operating the terminal 150, displays the DefaultScanParam.txt file 306 of the MFA 100 on the screen 300. The user, with this initial configuration file as a template, edits the description of the file into the desired operating conditions. In Fig. 3, for example, the user changes the name of the result store folder (the folder for storing the data on the result of executing the scanning function) constituting one of the operating condition items from "Default" to "User1" (the user operation (2-1) in Fig. 3). Next, the user changes the name of this configuration file "DefaultScanParam.txt" to "ScanParam.txt" (the user operation (2-2) in Fig. 3). The ScanParam.txt 306 (the icon representing ScanParam.txt file 306), changed to the desired operating conditions by the user, is moved (by drag and drop) to the icon 202 of the ScanStart folder (the user operation (2-3) in Fig. 3). The terminal 150, in response to the user operation (2-3), sends the ScanParam.txt file 306 and the PUT request designating the ScanStart folder to the MFA 100. The MFA 100 that has received the PUT request sets the operating conditions described in the ScanParam.txt file 306 as those of itself. Then, the MFA 100 executes the scanning function linked in advance to the ScanStart folder. The process executed by the MFA 100 is explained in detail later.

The process executed by the MFA 100 in response to reception of the "access command" sent from the terminal 150 is explained. The process explained below is described in the communication program 122a and the function control program 122b of the MFA 100.

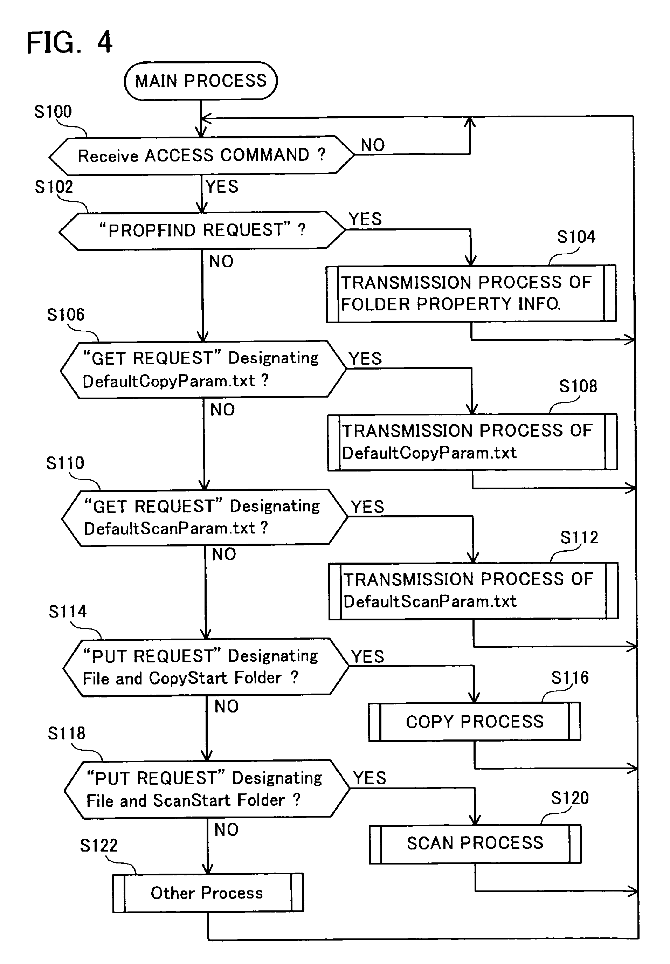

Fig. 4 is a flowchart showing the main process executed by the MFA 100.
The MFA 100 constantly monitors to check whether an access command has been received or not from the terminal 150 (step S100). As described above, the "access command" is defined as any of various "requests" sent by the terminal 150.
The MFA 100, upon reception of any one of access commands from the terminal 150 (YES in step S100), executes the process corresponding to the type of the access command received. In the case where the access command is the PROPFIND request (YES in step S102), the MFA 100 executes the folder property information transmission process (step S104). In the case where the access command is the GET request designating the DefaultCopyParam.txt file (YES in step S106), the MFA 100 executes the transmission process of the DefaultCopyParam.txt file (step S108). In the case where the access command is the GET request designating the DefaultScanParam.txt file (YES in step S 110), the MFA 100 executes the process of transmitting the DefaultScanParam.txt file (step S112). In the case where the access command is the PUT request designating a file and the CopyStart folder (YES in step S114), the MFA 100 executes the copy process (copying function) (step S116). In the case where the access command is the PUT request designating a file and the ScanStart folder (YES in step S118), the MFA 100 executes the Scan process (scanning function) (step S120). In the case where the access command is none of the aforementioned requests, another process corresponding to the particular access command is executed (step S122).

The folder property information transmission process (step S104 in Fig. 4), the DefaultCopyParam.txt file transmission process (step S108), the DefaultScanParam.txt file transmission process (step S112), the Copy process (step S116) and the Scan process are explained in detail.

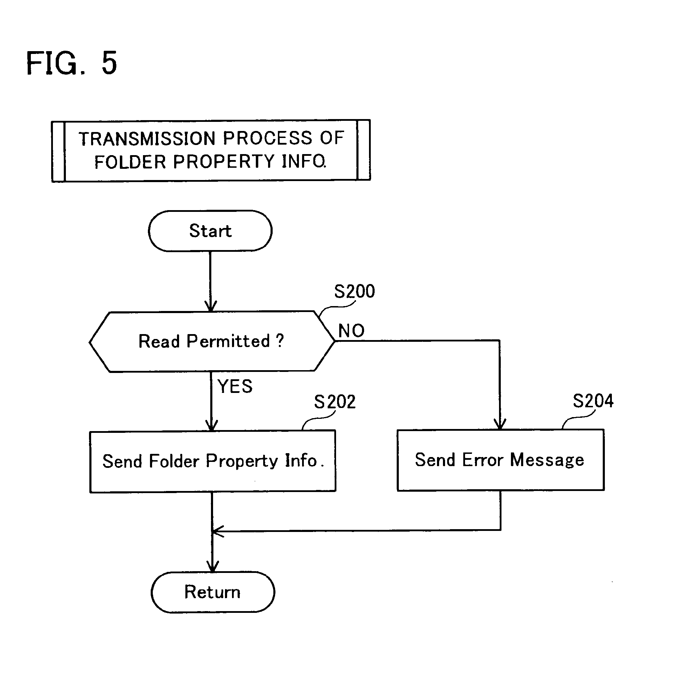

Fig. 5 is a flowchart showing the folder property information transmission process (step S104). In the folder property information transmission process, the MFA 100 checks whether the right to read the data (files and/or folders) of the MFA 100 is permitted to the terminal that has transmitted the PROPFIND request (step S200). The method of checking whether the right to read is granted or not (i.e. the read operation is permitted or not) is defined in the file sharing protocol of WebDAV, etc., and therefore, not described in detail. In the case where the right to read is not permitted (NO in step S200), the MFA 100 sends an error message to the terminal that has transmitted the PROPFIND request (step S204). On the other hand, in the case where the right to read is permitted (YES in step S200), the MFA 100 sends the folder property information 124 of the folder designated by the PROPFIND request to the terminal that has transmitted the PROPFIND request (step S202). Specifically, the MFA 100, in response to a request of the terminal, sends the folder information (the information of the file store region) to the terminal.

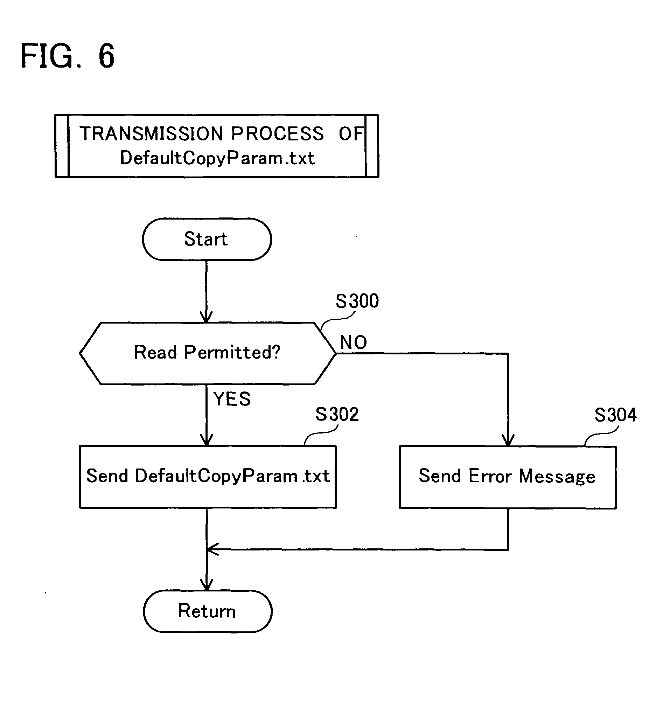

Fig. 6 is a flowchart showing the DefaultCopyParam.txt file transmission process (step S108 in Fig. 4).
In the DefaultCopyParam.txt file transmission process, the MFA 100 checks whether the terminal that has transmitted the GET request designating the DefaultCopyParam.txt file has the right to read the data of the MFA 100 or not (step S300). In the case where the right to read is not permitted (NO in step S300), the MFA 100 sends an error message to the terminal that has transmitted the GET request (step S304). On the other hand, in the case where the right to read is permitted (YES in step S300), the MFA 100 sends the DefaultCopyParam.txt file to the terminal that has transmitted the GET request (step S302). Specifically, the MFA 100, in response to the reception of the request from the terminal 150, sends the initial configuration file describing the predetermined operating conditions to the terminal 150.
The DefaultScanParam.txt file transmission process (step S112 in Fig. 4), is substantially identical with changing the "DefaultCopyParam.txt" to the "DefaultScanParam.txt" in the process of step S302 in Fig. 6. Therefore detail of the process is not described any further.

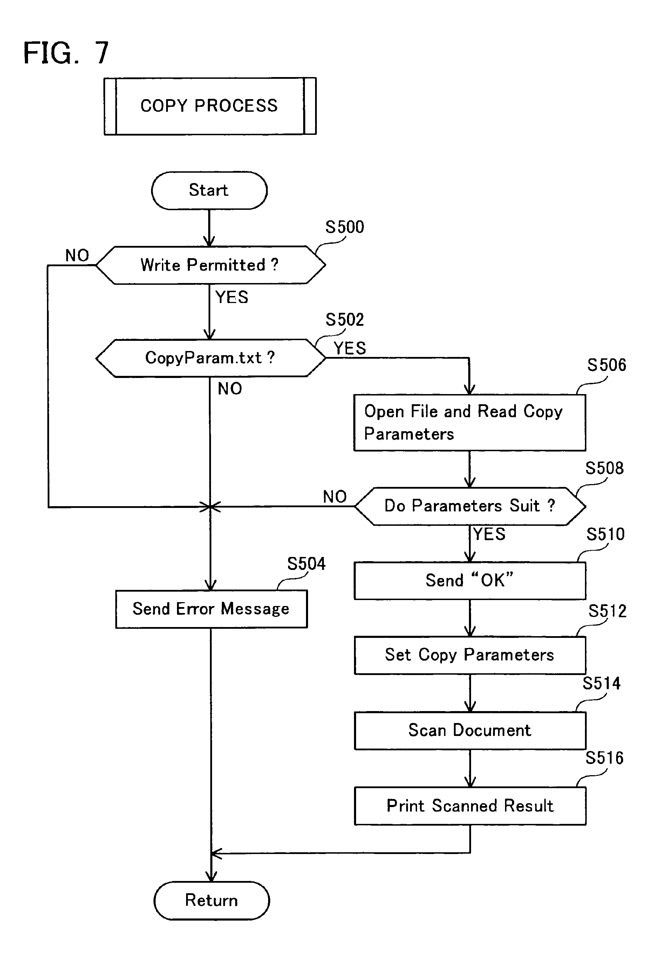

Fig. 7 is a flowchart showing the Copy process (step S116 in Fig. 4).
First, the terminal that has transmitted the PUT request is checked whether it has the right to write the data into the CopyStart folder or not (step S500). In the case where the right to write is not permitted (NO in step S500), the MFA 100 sends an error message to the terminal that has transmitted the PUT request (step S504).
On the other hand, in the case where the right to write is permitted (YES in step S500), the MFA 100 checks whether the file designated by the PUT request is the CopyParam.txt file or not (step S502). In the case where the designated file is not the CopyParam.txt file (NO in step S502), the MFA 100 sends an error message to the terminal that has transmitted the PUT request (step S504).
In the case where the designated file is the CopyParam.txt file (YES in step S502), the MFA 100 opens the CopyParam.txt file designated by the PUT request and reads the copy parameter (the operating conditions of the copying function) described in the received CopyParam.txt file (step S506).
Next, the MFA 100 checks whether the copy parameters that have been read suit for the copying function or not (step S508). In other words, the MFA 100 judges whether the copy parameters that have been read are adapted (suitable) to itself or not. Upon judgment that the copy parameters that have been read are not adapted to the copying function (NO in step S508), the MFA 100 sends an error message to the terminal 150 that has transmitted the PUT request (step S504). The examples that the copy parameters are not adapted to the copying function will list below.
- A case in which the data described in the CopyParam.txt file is not identifiable.
- A case in which the numerical value indicating the copy parameter exceeds the numerical range tolerated by the copying function of the MFA 100.
   Upon judgment that the copy parameter that has been read is adapted to the copying function (YES in step S508), on the other hand, the MFA 100 sends "OK" to the terminal that has transmitted the PUT request (step S510).
   Next, the MFA 100 sets the copy parameters that have been read (step S512). Then, the document set in the scan unit 114 is scanned (step S514), and the image data that has been read (scanned result) is printed by the printer unit 112 (step S516). The copying function is executed by the process of steps S514 and 516.

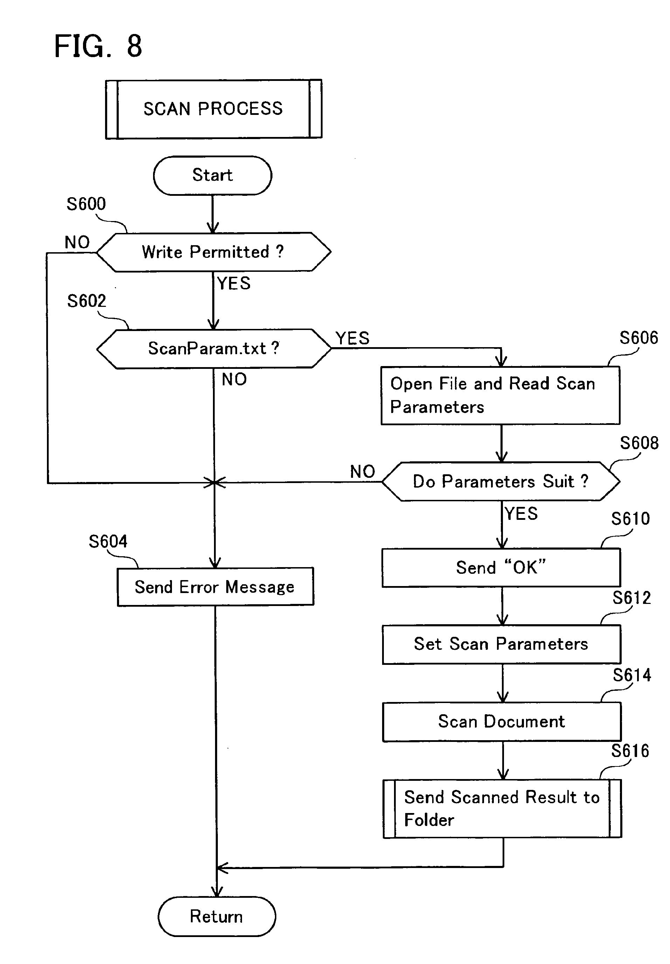

Fig. 8 is a flowchart showing the Scan process (step S120 in Fig. 4).
The Scan process is substantially the same as the Copy process described above. Steps S600 to S614 of the Scan process correspond to steps S500 to S514 of the Copy process, and therefore, are not described again.
In step S616, the image data that has been read in step S614 is sent to the result store folder (result store region) described in the ScanParam.txt file. The image data that has been read in step S614 may be referred to as "scanning result".
In the ScanParam.txt shown in Fig. 3, for example, the folder named User1 is designated as a result store folder. The MFA 100 sends the scan result to this folder named User1.

An explanation is given about the process executed by the terminal 150 in the case where the MFA 100 sends an error message to the terminal 150. The MFA 100 sends an error message to the terminal 150 through the process of steps S204, S304, S504 and S604 described above.

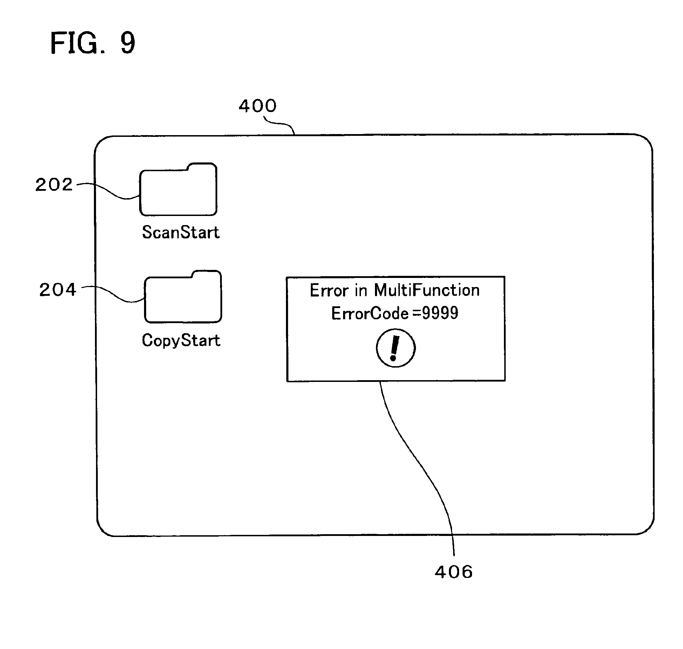

Fig. 9 shows a screen (screen 400) of the terminal 150 that has received the error message from the MFA 100. The terminal 150 makes an error display 406 based on the error message received from the MFA 100. The MFA 100 attaches an error code, which has different number depend on error type, with the error message transmission from the MFA 100. The terminal 150 makes the error display 406 including the error code attached to the error message.

The data transmitting step (steps S202, S204, S302, S304, S504, S510, S604, S610 and S616) of the folder property information, the file and the error message and the data receiving step (steps S100, S102, S106, S110, S114, S118) of the "access command" such as the PUT request are described in the communication program 122a of the MFA 100. The other steps in the figures are described in the function control program 122b of the MFA 100. In other words, the CPU 110 executing the communication program 122a may be referred to as the "transmitter" and the "receiver" of the MFA 100 (network device). Also, the CPU 110 executing the function control program 122b (especially, the Copy process (step S 116) and the Scan process (step S120)) may be referred to as the "controller" of the MFA 100. Further, the CPU 110 executing the judgment process of steps S508 and S608 may be referred to as the "judgment means" of the MFA 100.
Also, the CPU 152 of the terminal 150 executes various processes based on the program 156 in store. The CPU 152 executing the steps of displaying the icons 202, 204 on the screen based on the display program 156b may be referred to as the "icon display means" of the terminal 150. Further, the CPU 152 executing the transmitting steps of the file 158 (configuration file) based on the communication program 156a may be referred to as the "transmitter" of the terminal 150. Similarly, the CPU 152 making the error display 406 on the screen based on the display program 156b may be referred to as the "error display means".

The MFA 100 (network device) according to the aforementioned embodiment is capable of receiving the configuration file. Because the configuration file is in text format, the user can freely edit the configuration file. The user can directly describe the operating conditions of the function of the MFA 100 in the configuration file. The user can control the MFA 100 under the desired operating conditions simply by associating the icon of the configuration file edited to the desired operating conditions and the icon of the predetermined folder to each other on the screen of the terminal. The term "associating" may be defined as the operation of moving the icon representing the configuration file to the icon representing the folder linked to the specific function.
The configuration file describing the operating conditions of the MFA 100 is a text file, and therefore, the user can designate the desired operating conditions without any specialized UI.
The MFA 100 receives the configuration file based on the file sharing protocol and executes a predetermined function under the operating conditions described in the configuration file. The terminal 150 is not required to have a specialized user interface program to control the MFA 100.

Some preferred modifications of the MFA 100 are described below.
The MFA 100 may be initialized with predetermined operating conditions (default operating conditions). In the case where the copy parameters or the scan parameters that has been read are not adaptable, the MFA 100 may execute the function with the default operating conditions. Also, a folder of another terminal connected to the network may be designated as a result store folder of the scan parameters. In the case where the result store folder of the ScanParam.txt is described as Folder-¥¥PC1¥User1, for example, the scan result will be stored in the folder named User1 assigned to the storage of the terminal named PC1. With this configuration, the scan result can be stored in other than the terminal to which the PUT request is transmitted.

### (SECOND EMBODIMENT)

Next, a second embodiment is explained. The device according to the second embodiment is also the same multi-function apparatus as the device according to the first embodiment. The multi-function apparatus according to the second embodiment has the same configuration as the MFA 100 according to the first embodiment shown in Fig. 1. In the description that follows, the MFA 100 according to the first embodiment shown in Fig. 1 is regarded as the device according to the second embodiment. The multi-function apparatus according to the second embodiment, however, has a timer for acquiring the present time and date.
The main technical feature of the MFA 100 according to the second embodiment lies in the function by which the operating conditions described in the received configuration file are saved in the backup file. This function is described in the function control program 122b.

The initial configuration file stored in the storage 120 of the MFA 100 according to the second embodiment is explained.

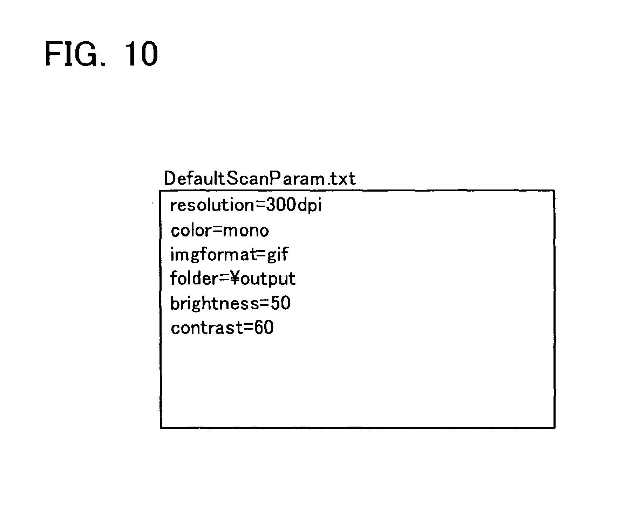

Fig. 10 shows an example of the initial configuration file. This initial configuration file contains the description of the operating conditions of the scanning function and is named the DefaultScanParam.txt. The file having the extension "txt" indicates a text file editable directly by the user.

The DefaultScanParam.txt describes the following operating conditions for each operating condition item. Incidentally, the left side of the equality sign indicates the operating condition item and the right side of the equality sign indicates the default operating condition for the corresponding operating condition item.
- resolution = 300 dpi
- color (reading mode) = mono (monochrome)
- imgformat (output format) = gif (giff format)
- folder (folder for storing output data) = ¥output
- brightness = 50
- contrast = 60
The file (DefaultScanParam.txt, etc.) describing the default operating conditions is stored in the output folder assigned in the storage 120.

The storage 120 according to the second embodiment has the ScanStart folder, the CopyStart folder, the Copy folder, the Facsimile folder and the output folder.

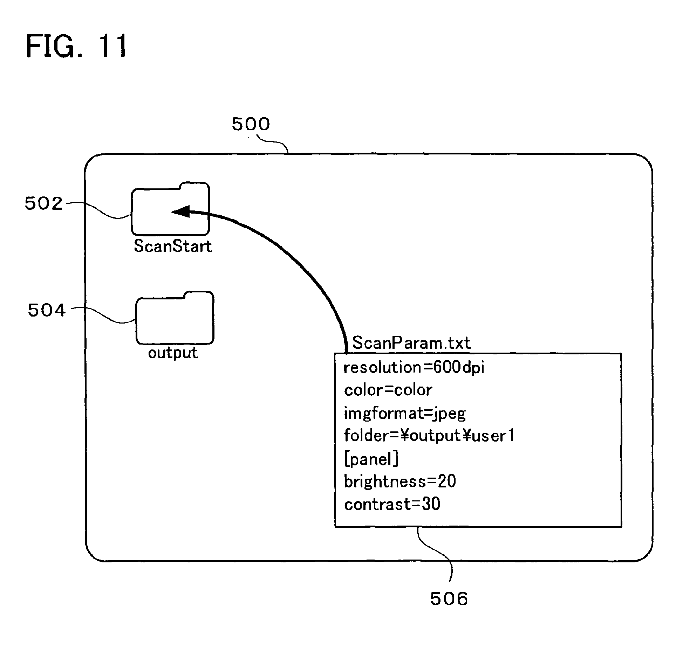

The user operation of the terminal 150 with the MFA 100 executing a specific function is illustrated. Fig. 11 shows an example of the screen (screen 500) of the terminal 150.
As an example, an explanation is given about a case in which the user of the terminal 150 controls the multi-function apparatus 100 to execute the scanning function.
The screen 500 in Fig. 11 displays an icon 502 representing the ScanStart folder and an icon 504 representing the output folder. Also, the screen 500 displays thereon the ScanParam.txt file 506 (one of the configuration files) opened by the text editor. The icons of other folders are not shown in Fig. 11. The icon 502 of the ScanStart folder, the icon 504 of the output folder and the icons of other folders (not shown) are displayed on the screen of the terminal 150 as the result of the transmission of the folder property information 124 from the MFA 100 in response to reception of the PROPFIND request transmitted by the terminal 150.
As described above, the DefaultScanParam.txt file is stored in the output folder assigned to the storage 120. The user, by acquiring the DefaultScanParam.txt file from the output folder, rewrites the operating conditions described in the file into the desired operating conditions. Also, the user changes the file name from "DefaultScanParam.txt" to "ScanParam.txt". In this way, the user can easily create the configuration file describing the desired operating conditions.
The ScanParam.txt file 506 shown in Fig. 11 is edited into the operating conditions desired by the user with the DefaultScanParam.txt as a template.
The symbol "[panel]" described in the ScanParam.txt indicates that the subsequent lines are commented out. The MFA 100 is programmed to ignore the description subsequent to [panel] at the time of extracting the contents of the ScanParam.txt. The description "brightness=20" and "contrast=30" shown in Fig. 11, therefore, are simply comments for the user and ignored by the MFA 100.

With the movement of the ScanParam.txt file 506, by the user, to the icon 502 of the ScanStart folder (by drag and drop) as indicated by the thick arrow in Fig. 11, the terminal 150 sends the PUT request (file store command) designating the ScanParam.txt file 506 and the ScanStart folder to the MFA 100 in response to the user operation. The MFA 100 that has received this PUT request sets the operating conditions described in the ScanParam.txt file 506 as the operating conditions of itself. In the process, the MFA 100 ignores the operating condition items "brightness" and "contrast" commented out in the configuration file. With regard to the operating condition items "brightness" and "contrast" thus commented out, the MFA 100 sets the operating conditions described in the DefaultScanParam.txt file stored in the storage 120. After setting the whole operating conditions, the MFA 100 executes, under the set operating conditions, the scanning function linked beforehand to the ScanStart folder designated by the PUT request.

An explanation is given about the process of the MFA 100 executing the scanning function after receiving the "request". The flowchart of the process from the reception of the "request" to the calling of the scan processing routine is shown in Fig. 4 and therefore not described again.

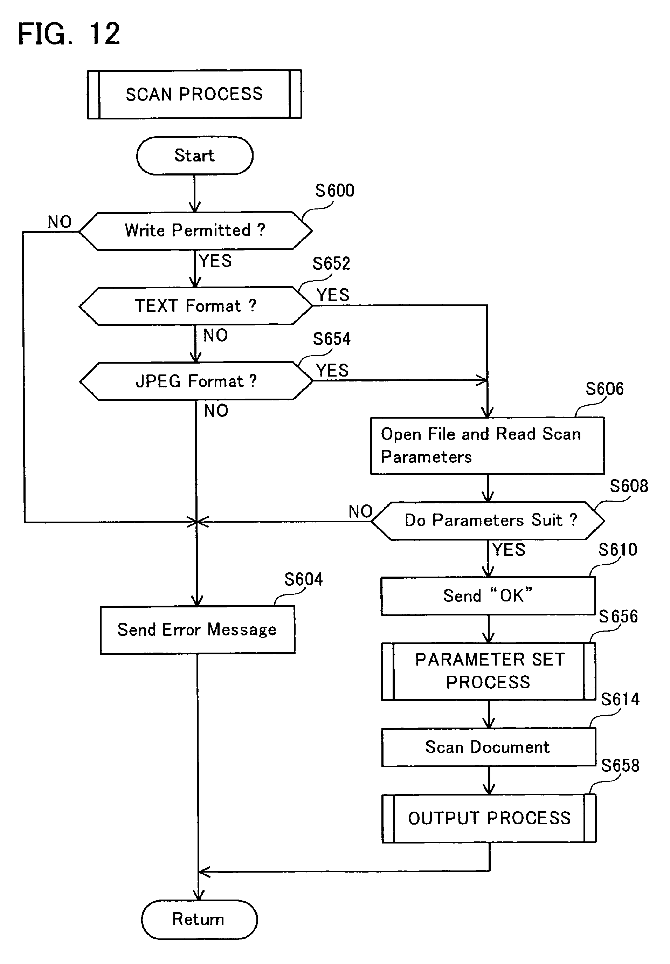

With reference to Fig. 12, the scan process (scanning function) is explained. Fig. 12 is a flowchart showing the scan process. The scan process according to this embodiment is partly identical to the scan process (Fig 8) according to the first embodiment. In Figs. 8 and 12, the same steps are designated by the same reference numerals, respectively. In the flowchart of Fig. 12, steps S652, S654, S656 and S658 are different from the flowchart shown in Fig. 8.
First, the terminal 150 that has transmitted the PUT request is checked whether having the right to write the data into the ScanStart folder (step S600). In the case where the terminal 150 does not permitted to write (NO in step S600), the MFA 100 sends an error message to the terminal 150 that has transmitted the PUT request (step S604).
In the case where the terminal 150 is permitted to write (YES in step S600), the MFA 100 checks whether the file designated by the PUT request is the configuration file or not (steps S652 and S654). Incidentally, the "parameter file" shown in Fig. 12 has the same meaning as the "configuration file". The MFA 100 is programmed in such a manner as to recognize that the file including the character string "ScanParam" in the file name thereof is a parameter file (configuration file).
The MFA 100 is also programmed to receive the file in text form and jpeg form as a parameter file (configuration file). The parameter file in text form is the "ScanParam.txt" file described above. The parameter file in jpeg form, on the other hand, is the file with the operating conditions described in the spare data region (more specifically, the region called the "MakerNote tag") of the jpeg file defined in the jpeg standard. The parameter file in jpeg form is explained later.
The MFA 100 is programmed to receive the parameter file in text form in priority over the parameter file in jpeg form. Specifically, the MFA 100 first judges whether the file designated by the PUT request is a parameter file in text form or not (step S652). In the case where the file designated by the PUT request is not in text form (NO in step S652), the MFA 100 judges whether the file designated by the PUT request is the parameter file in jpeg form or not (step S654).
In the case where the file designated by the PUT request is in neither form (neither text form nor jpeg form) (No in steps S652 and S654), then the MFA 100 sends an error message to the terminal 150 that has transmitted the PUT request (step S604).
In the case where the file designated by the PUT request is a parameter file (configuration file) of either form (YES in step S652 or step S654), the MFA 100 opens the parameter file and reads the scan parameters (the operating conditions of the scanning function) described in the parameter file (step S606). Incidentally, in the description that follows, the scan parameters are called simply the parameters.
Next, the MFA 100 checks whether the parameters that have been read are normal or not (step S608). In other words, the MFA 100 judges whether the parameters that have been read suit for the scanning operation. In the case where the parameters do not suit for the scanning operation (NO in step S608), the MFA 100 sends an error message to the terminal that has transmitted the PUT request (step S604). As described above, the MFA 100 is programmed to ignore the description subsequent to the character string [panel] in the parameter file in the case where the parameter file is a text file in the name of ScanParam.txt.
In the case where the parameters are adapted to the scan operation (YES in step S608), on the other hand, the MFA 100 sends "OK" to the terminal 150 that has transmitted the PUT request (step S610).
Next, the MFA 100 executes the parameter setting process (step S656). In the parameter setting process, the parameters (operating conditions) are set to the operating conditions for the scanning operation. The parameter setting process is described later.
Next, the MFA 100 scans the document set in the scanner unit 114 (step S614). Then, the MFA 100 executes the output process for outputting the scan result (read image data) (step S658). The output process will be explained later.
In this way, the MFA 100, upon reception of the PUT request designating the parameter file (configuration file) and the ScanStart folder, executes the scanning function under the operating conditions described in the parameter file.

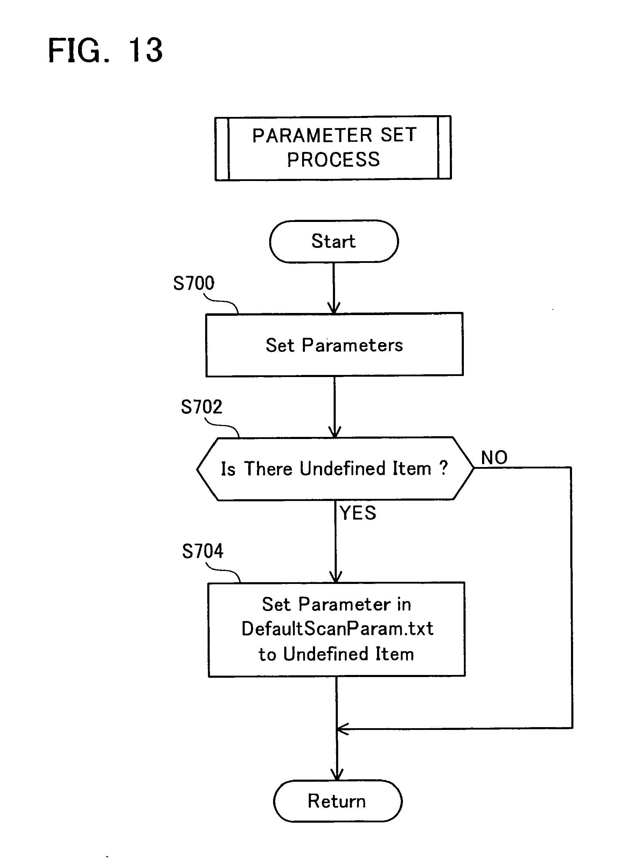

Next, the parameter setting process (step S656 shown in Fig. 12) is explained. Fig. 13 is a flowchart showing the parameter setting process.
First, the parameters that have been read in step S606 shown in Fig. 12 is set for each operating condition item (step S700).
Then, at step S702, the MFA 100 checks whether there is any operating condition item not yet set in step. S700. The case where there is any operating condition item not yet set indicates the presence of an operating condition item not described in the parameter file (configuration file) received by the MFA 100. The operating condition item not yet set may be referred as undefined item.
In the case where the parameter file is the ScanParam.txt file 506 shown in Fig. 11, for example, the operating condition items "brightness" and "contrast" are commented out. In the case where the MFA 100 receives this ScanParam.txt file 506, therefore, it indicates that the operating condition items "brightness" and "contrast" are not set yet in step S700. In other words, the operating condition items "brightness" and "contrast" will be undefined items.
In the presence of an undefined item (YES in step S702), the default parameter (default operating condition) corresponding to the undefined item is read from the DefaultSeanParam.txt file stored in the storage 120, and the parameter thus read is set for the undefined item (step S704). In the aforementioned case, the operating condition items "brightness" and "contrast" are not yet set. The MFA 100, therefore, reads "brightness=50" and "contrast=60" from the DefaultScanParam.txt shown in Fig. 10, and sets the default operating condition "50" as the operating condition item "brightness" and sets the default operating condition "60" as the operating condition item "contrast". In this way, the operating conditions are set for all the items.

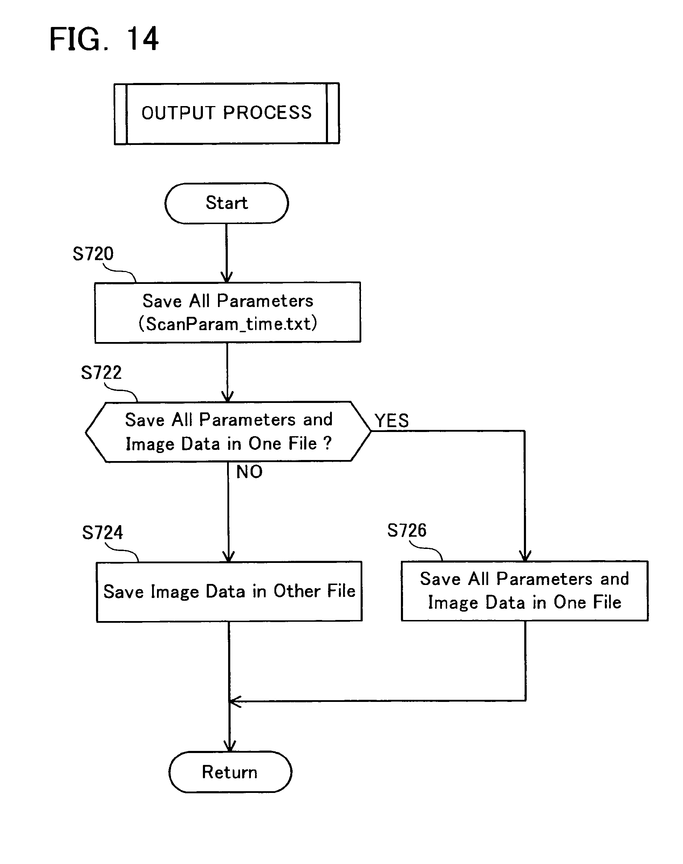

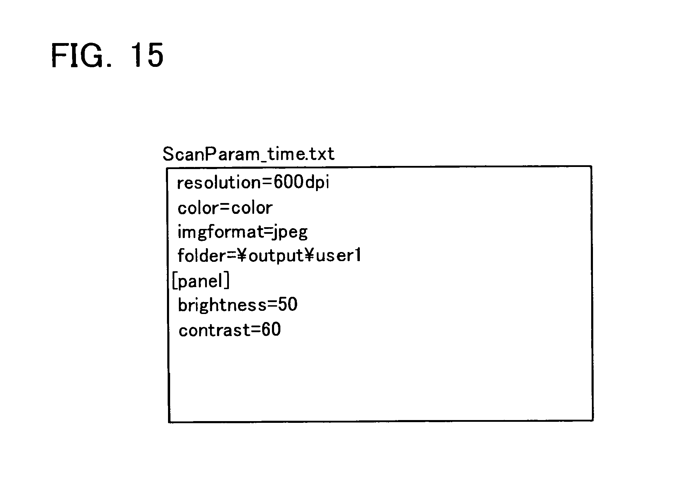

Next, the output process (step S658 shown in Fig. 12) is explained. Fig. 14 is a flowchart sowing the output process.
First, the MFA 100 creates a new text file called ScanParam_time.txt. This file is also called a backup file. Then, all the parameters set by the MFA 100 according to the parameter setting process are saved in the backup file (step S720). Specifically, the MFA 100 saves, in the backup file, all the parameters set by the MFA 100 through the parameter setting process.
Incidentally, the present time/date acquired by a timer (not shown) of the MFA 100 is substituted into the character string "time" in the name "ScanParam_time.txt". In the case where the present time is yy/mm/dd/tt/ss (year/month/date/hour/minute), for example, the newly created backup file is named "ScanParam_yymmddttss.txt".
The newly created backup file holds the operating conditions described in the received ScanParam.txt file 506 and the default operating conditions set in step S704 in Fig. 13. Fig. 15 shows an example of the backup file. As shown in Fig. 15, the ScanParam_time.txt file holds the description of the operating conditions (except for the operating conditions commented out) described in the ScanParam_time.txt file 506 shown in Fig. 11 and "brightness=50" and "contrast=60" included in the operating conditions described in the DefaultScanParam.txt file shown in Fig. 10. Specifically, all the operating conditions employed for function execution are described in the backup file. Incidentally, the character string [panel] (character string indicating the comment out) described in the ScanParam.txt file 506 shown in Fig. 11 is held as it is.
In the case where the operating conditions for all the operating condition items are described in the parameter file (configuration file) received by the MFA 100, the newly created ScanParam_time.txt file (backup file) has the same contents as the received parameter file.

Back to the explanation of Fig. 14. The MFA 100 checks whether all the parameters set by the parameter setting process are to be added or not to the scan result (read image data) (step S722). Specifically, the MFA 100 checks whether all the parameters and the image data are to be output to a single backup file or not, or i.e. whether all the parameters and the image data are to be saved in a single file or not. As to whether all the parameters and the image data are to be output to a single file, an instruction is given in advance by the user. This instruction may be given through an operating switch (not shown) of the MFA 100 or designated in the parameter file (configuration file).
In the case where the judgment in step S722 is NO, the image data read by execution of the scanning function is output to the result store folder described in the parameter file (step S724). In the case where the parameter file is the ScanParam.txt file 506 shown in Fig. 11, the result store folder is "¥output¥user1". The image data is saved in a file different from the backup file created in step S720.
In the case where the judgment in step S722 is YES, on the other hand, the MFA 100 saves all the parameters and the image data in a single file. This file is output to the result store folder described in the parameter file (step S726).
In both steps S724 and S726, the image data is saved in the file of jpeg form. In step S726, all the parameters (operating conditions) are described in the spare data region of the jpeg form file. The spare data region is specifically called the "MakerNote tag" of the jpeg file defined in the jpeg standard. In the description that follows, the backup file for saving all the parameters and the image data is referred to as the image file with the operating conditions.
The user, by adding the character string "ScanParam" to the name of the image file with the operating conditions, can use the image file with the operating conditions as a parameter file. Incidentally, the MFA 100 is programmed so that in the case where the parameter file is the image file with the operating conditions in jpeg form in step S606 shown in Fig. 12, the operating conditions are read from the "MakerNote tag" region of the jpeg file.

The MFA 100 according to the second embodiment has the following advantages.
(1) All the operating conditions for execution of the scanning function will be saved in the file named "ScanParam_time.txt" or the image file with the operating conditions by the output process shown in Fig. 14. The backup file (or the image file with the operating conditions) is stored in the output folder in the storage 120 of the MFA 100. The user, by using the file sharing protocol, can acquire the ScanParam_time.txt or the image file with the operating conditions in store from the MFA 100. The user, by reusing the acquired file, can execute the scanning function under the same operating conditions as those designated in the past. The user is not required to newly create a configuration file describing the operating conditions designated in the past.
(2) In the MFA 100, the default operating conditions for executing the scanning function are stored as the description in the DefaultScanParam.txt file. In the case where the received configuration file contains the operating condition items with no description of the operating conditions ("undefined items" in other words), the MFA 100 executes the scanning function by setting the default operating conditions for the undefined items. The user is not required to describe, in the configuration file, the items allowable in the default operating conditions.
(3) In the case where the received configuration file contains the undefined items, the MFA 100 saves, in the backup file, the operating conditions described in the received configuration file and the default operating conditions employed at the time of executing the scanning function.
   The DefaultScanParam.txt file describing the default operating conditions is a text file stored in the output folder of the MFA 100. Therefore, the user can directly edit this DefaultScanParam.txt file. The MFA 100, in executing the scanning function using the default operating conditions, saves the operating conditions for execution including the set default operating conditions. Even in the case where the set default operating conditions are changed, therefore, the operating conditions for execution before the change can be easily designated again.
(4) The MFA 100, upon execution of the scanning function, can save the operating conditions for the execution and the image data (the execution result) in a single file (including the image file with the operating conditions). Specifically, all the operating conditions for execution of the scanning function will be saved in the image file of the execution result of the scanning function by the output process shown in Fig. 14. The user, by checking the image of the image file with the operating conditions, can confirm the scanning function execution result based on the operating conditions described in the image file. Before redesignating the operating conditions designated in the past, a particular result brought from the particular operating conditions can be grasped in advance.
(5) The MFA 100, in saving the operating conditions in the file, adds the saving time/date to the file name. From the file name, therefore, the user can be easily informed of the time/date on which the operating conditions are used.

The backup process explained in the second embodiment is described in the function control program 122b. Especially, steps S720 and S726 shown in Fig. 14 are main steps of the backup process.
In the process of step S724 or S726, the backup file ("ScanParam_time.txt" or the image file with the operating conditions) may not be stored in the storage 120 of the MFA 100. Instead, the MFA 100 may save the backup file in the storage of other terminals connected to the network.
The backup process is not limited to the scanning function, but is applicable also to any function such as the printing function and the facsimile function which can be executed by the MFA 100 (network device).

### (THIRD EMBODIMENT)

Next, a third embodiment is explained. The device according to the third embodiment is also the same multi-function apparatus as the device according to the first embodiment. The configuration of the multi-function apparatus according to the third embodiment is substantially identical with that of the MFA 100 according to the first embodiment shown in Fig. 1. In the description that follows, the MFA 100 according to the first embodiment shown 1 is regarded as the device according to the third embodiment.
The main technical feature of the MFA 100 according to the third embodiment lies in that the function under execution can be controlled upon reception of a request (for example, the PROPFIND request) for accessing a specified folder (file store region) as well as the PUT request (file store command). This function is described in the function control program 122b.

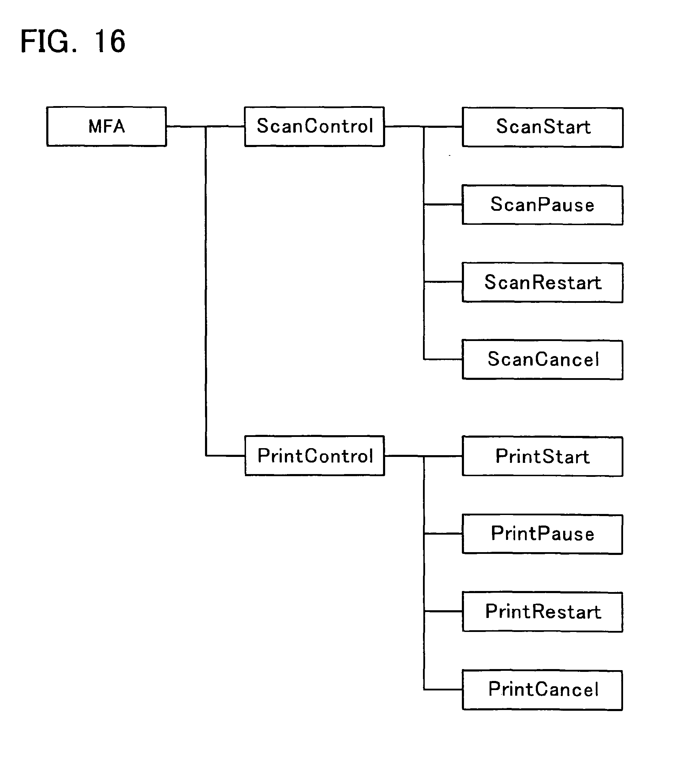

The hierarchical structure of the folder (file store region) assigned in the storage 120 of the MFA 100 according to the third embodiment is shown in Fig. 16.
The MFA folder makes up a base folder (root folder). The layers assigned under the MFA folder include a ScanControl folder, a PrintControl folder, a Facsimile folder and a Copy folder. The Facsimile folder and the Copy folder are not shown in Fig. 16.
The layers assigned under the ScanControl folder include a ScanStart folder, a ScanPause folder, a ScanRestart folder and a ScanCancel folder. Also, the layers assigned under the PrintControl folder include a PrintStart folder, a PrintPause folder, a PrintRestart folder and a PrintCancel folder. Similar folders are also assigned under the Facsimile folder and the Copy folder.
The MFA 100 links the ScanStart folder with the start process that starts the scanning function (scan process). The MFA 100 links the ScanPause folder with the pause process that pauses the scanning function under execution. The MFA 100 links the ScanRestart folder with the restart process that restarts the scanning function paused. The MFA 100 links the ScanCancel folder with the cancel process that cancels the scanning function under execution. Each folder has a name indicating the corresponding behaviors of the process. The correspondence between each folder and the process is defined in the function control program 122b.

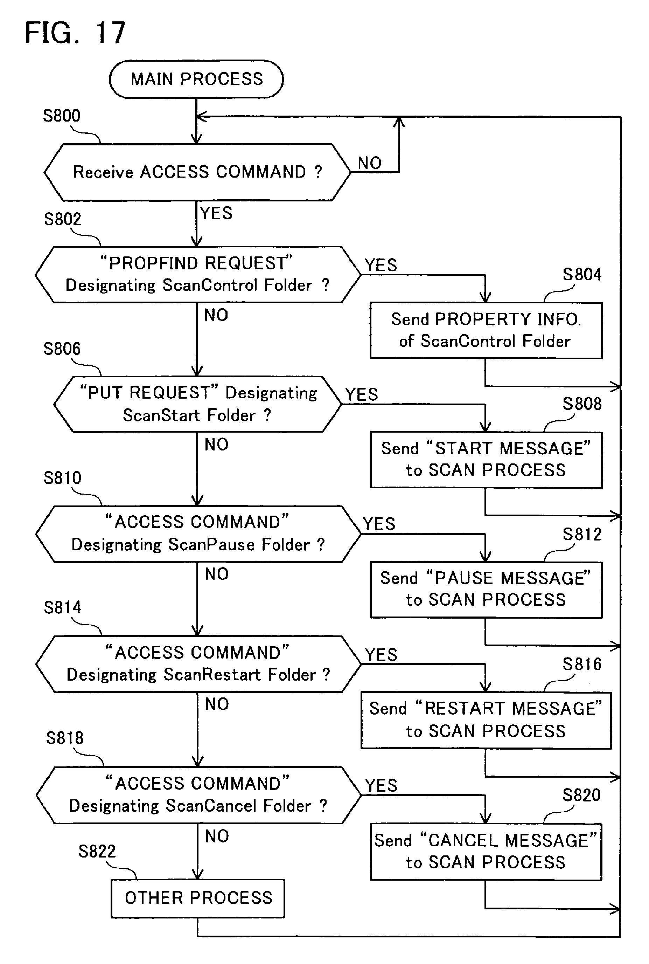

The process executed by the MFA 100 according to the third embodiment is explained. Fig. 17 is a flowchart showing the main process executed by the MFA 100. The CPU 110 of the MFA 100 can execute plural processes in parallel. For example the main process and the scan process described later can be executed in parallel.

The MFA 100 constantly checks whether an access command has been received from the terminal 150 or not (step S800).
The MFA 100, upon reception of an access command from the terminal 150 (YES in step S800), executes the process corresponding to the type of the access command thus received.

In the case where the received access command is a command "PROPFIND request" that requests the property information of the ScanControl folder (YES in step S802), the main process transmits the property information of the ScanControl folder to the terminal 150 (step S804). The property information of the ScanControl folder, as described above, includes the names of the respective folders assigned to the layers under the ScanControl folder, such as; the ScanStart folder, the ScanPause folder, the ScanRestart folder and the ScanCancel folder.

In the case where the received access command is the PUT request that designates the ScanStart folder (YES in step S806), the main process sends the "start message" to the scan process (step S808). The term "message" indicates the data exchanged between the processes executed within the MFA 100. When the predetermined "message" is sent from the main process to the scan process, the scan process executes the process corresponding to the "message", so that the scan process is controlled. Incidentally, the scan process is described later.

In the case where the received access command is the one designating the ScanPause folder (such as the PROPFIND request) (YES in step S810), the main process sends the "pause message" to the scan process (step S812).
In the case where the received access command is the one designating the ScanRestart folder (YES in step S814), on the other hand, the main process sends the "restart message" to the scan process (step S816).
In the case where the received access command is the one designating the ScanCancel folder (YES in step S818), the main process sends the "cancel message" to the scan process (step S820).
In the case where the received access command is other than the ones described above, the process corresponding to the particular command is executed (step S822).
The access command to the ScanPause folder, the access command to the ScanRestart folder and the access command to the ScanCancel folder may be any one of the PUT command, the GET command and the PROPFIND command. Also, other commands specified in the file sharing protocol and designating a predetermined folder linked to a predetermined process will be available.

The "start message", the "pause message", the "restart message" and the "cancel message" are sent from the main process to the scan process. When the scan process receives a message, the scan process executes the process corresponding to the received message. In other words, the message sending process can control the scanning function.
As described above, in the main process, a unique message (that causes the unique process for controlling the function) is linked to each folder, and the MFA 100 can control the scanning function in accordance with the particular unique message. In other words, the MFA 100 can control the scanning function in accordance with the access command designating a unique folder linked to the unique process.
According to this embodiment, the process of the MFA 100 is explained taking the scanning function as an example, and so are the other functions (such as the printing function and the facsimile function). Specifically, in the main process, plural control processes for controlling predetermined functions are linked to plural folders, respectively, and the functions are controlled based on the control processes linked to the folder designated by the received access command.
The scanning function starts the execution in response to reception of the "start message". The "pause message", the "restart message" and the "cancel message" indicate the processes for controlling the scanning function under execution.

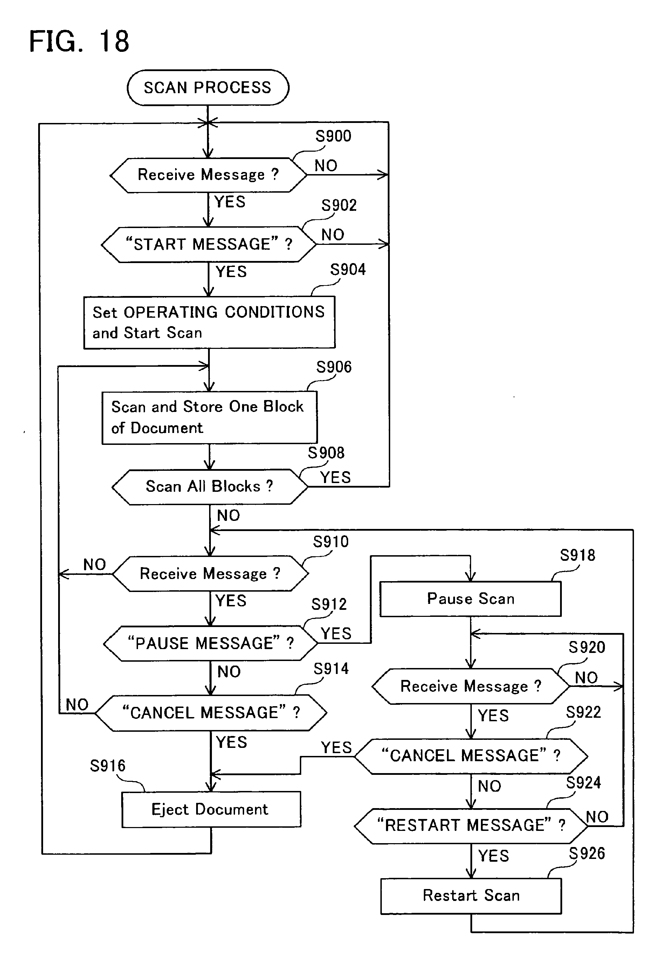

Next, the scan process (scanning function) is explained. Fig. 18 is a flowchart showing the scan process.
The scan process constantly monitors to check whether a message has received from the main process or not (step S900). The scan process, in response to reception of the "start message" from the main process (YES in step S902), starts the scan operation (step S904). As shown in steps S806 and S808 in Fig. 17, the "start message" is sent to the scan process in the case where the main process receives the PUT request (file store command) that designates the ScanStart folder and a configuration file, and requests to store the designated file in the designated folder. In step S904, the contents of the designated file (configuration file) are set in the operating conditions for execution of the scan process (scanning function). The contents of the designated file are the same as the operating conditions explained in the first embodiment.

The scan process that has started the scan operation scans the document to be read block by block and stores the data thus scanned (step S906). One block is equivalent to a predetermined number of lines of the document. Once all the blocks are scanned and stored (YES in step S908), the scan process is finished and waits the next "start message" (steps S900, S902).

Once the block scan starts, the scan process checks whether there is any message from the main process (step S910), until all blocks has been scanned (NO in step S908).
In the case where the "pause message" is received during the execution of the scanning function (YES in step S912), the scan process pauses the scanning function under execution (step S918). Then, the MFA 100 waits other message (step S920).
In the case where the "cancel message" is received during the execution of the scanning function (YES in step S914), on the other hand, the scan process ejects the document being scanned and terminates the scan process (step S916). Then, the MFA 100 waits next "start message" (steps S900, S902).

In the case where the "cancel message" is received after the pause of the scan process in step S918 (YES in step S922), the scan process ejects the document being scanned and terminates the scan process (step S916). Then, the MFA 100 waits the next "start message" (steps S900, S902).
In the case where the "restart message" is received after the pause of the scan process in step S918 (YES in step S924), the scan process restarts the paused scan operation (step S926). The scan process, once restarted, is again under execution, and while checking the reception of the next message (step S910), continues to scan block by block (step S906).

As described above, the operation of the scan process is controlled by various messages sent from the main process. Even during the execution of the scanning function, the scan process is controlled by the access command received from the terminal 150.

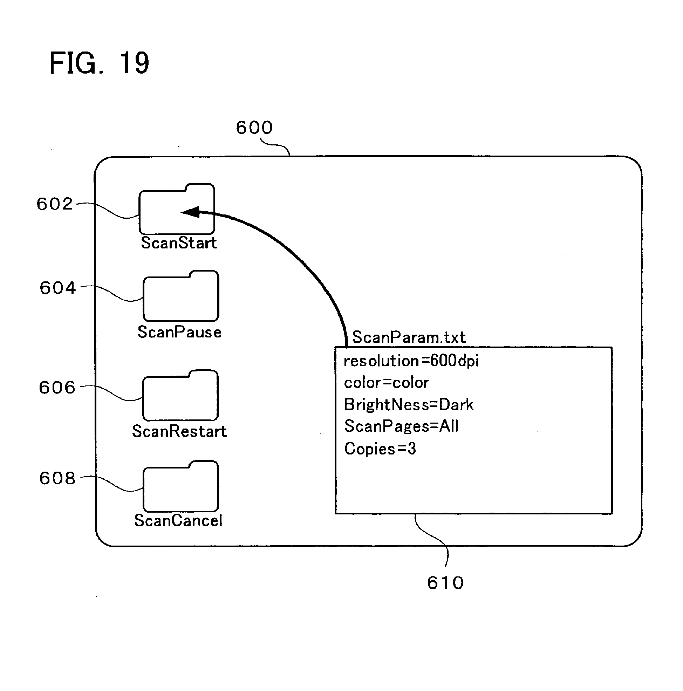

Now, the process of the terminal 150 to transmit the access command to the MFA 100 is explained. Fig. 19 shows an example of the screen (screen 600) of the terminal 150. The terminal 150, upon reception of the property information of the ScanControl folder from the MFA 100, displays on the screen 600 the icon representing each folder assigned to the layers under the ScanControl folder. As shown in Fig. 19, the screen 600 displays an icon 602 representing the ScanStart folder, an icon 604 representing the ScanPause folder, an icon 606 representing the ScanRestart folder and an icon 608 representing the ScanCancel folder.

The user of the terminal 150, when desirous of controlling the MFA 100 to execute the scanning function (scan process), moves (drags and drops) the ScanParam.txt file 610 (the icon representing the file 610) describing the operating conditions of the scanning function to the icon 602 representing the ScanStart folder. The thick solid line in Fig. 19 shows the movement of the icon. Then, the PUT request (file store command) designating the ScanParam.txt file 610 and the ScanStart folder will be transmitted from the terminal 150 to the MFA 100.
As shown in Fig. 19, the ScanParam.txt file 610 contains the description of the operating conditions for executing the scanning function.
The main process of the MFA 100, in response to reception of the PUT command designating the ScanStart folder and the ScanParam.txt file 610, executes steps S806 and S808 (Fig. 17). Then, the "start message" is sent to the scan process by the process of step S808. The scan process that has received the "start message" starts the scan process (scanning function) (steps S902, S904). In the process, step S904 of the scan process reads the contents of the ScanParam.txt file 610 designated by the PUT request and sets the contents thereof in the operating conditions of the scanning function. Specifically, the MFA 100, in response to reception of the access command that designates the configuration file and requires to store the designated configuration file in the ScanStart folder, sets the operating conditions described in the designated configuration file in itself and then starts the scan process.
The user of the terminal 150, simply by associating the configuration file to a specified folder icon (by drag and drop), can instruct the MFA 100 to start a desired function under the desired operating conditions.

The user of the terminal 150, when desirous of pausing the scanning function under execution, clicks twice (double clicks) the icon 604 representing the ScanPause folder displayed on the screen 600. Then, the PROPFIND request (a kind of the access command) designating the ScanPause folder is transmitted from the terminal 150 to the MFA 100. The main process of the MFA 100, in response to reception of this request, executes step S912. As a result, the "pause message" linked to the ScanPause folder is sent to the scan process, and the scanning function (scan process) is paused (steps S912, S918).

The user of the terminal 150, when desirous of restarting the scan process paused, clicks twice the icon 606 representing the ScanRestart folder displayed on the screen 600. Then, the PROPFIND request designating the ScanRestart folder is sent from the terminal 150 to the MFA 100. The main process of the MFA 100, in response to this command, executes steps S 114 and S 116. As a result, the "restart message" linked to the ScanRestart folder is sent to the scan process thereby to restart the scanning function (steps S324, S326).

The user of the terminal 150, when desirous of canceling the scanning function under execution, clicks twice the icon 608 representing the ScanCancel folder displayed on the screen 600. Then, the PROPFIND request designating the ScanCancel folder is sent from the terminal 150 to the MFA 100. The main process of the MFA 100, in response to this request (access command), executes steps S818 and S820. As a result, the "cancel message" linked to the ScanCancel folder is sent to the scan process thereby to cancel the scanning function (step S916).

As described above, the MFA 100 sends the folder property information (the property information of the file store region) to the terminal 150. As a result, the terminal 150 displays icons representing folders assigned in the storage 120 of the MFA 100. When the user of the terminal 150 clicks twice the one of icons representing a folder which name indicates a function the user desired, an access command designating the folder is sent from the terminal 150 to the MFA 100.
MFA 100 links each folder to the process (the process of sending a message to the scan process) for controlling the function executed by the MFA 100 (such as the scanning function). The MFA 100, upon reception of the access command designating a predetermined folder, controls the function under execution based on the control process linked to the predetermined folder.

With the process described above, the user of the terminal 150 can control the MFA 100 simply by operating the icon displayed on the screen of the terminal 150. The icon displayed on the screen is a folder (file store region) assigned to the store region of the storage 120 of the MFA 100. The user of the terminal 150, therefore, can control the MFA 100 in the same manner as if to operate the file or the folder on the screen of the terminal. The terminal 150 controls the MFA 100 in accordance with an access command designating a predetermined folder sent from the terminal 150 to the MFA 100. The access command designating a predetermined folder is transmitted/received based on the file sharing protocol. The file sharing protocol is originally a protocol for facilitating the sharing of a file and implemented in many terminals as standard equipment. The fact that the MFA 100 can be controlled through a network using such a protocol eliminates the need of packaging a specialized program to control the MFA 100 in the terminal 150. The plural folders displayed at the terminal are each linked to a unique control process, and therefore, the user of the terminal can control the function under execution simply by accessing the folder displayed on the screen.
Also, each folder has a name indicating the control process for controlling the operation of the MFA 100. The user of the terminal 150, therefore, can easily discriminate folders to which the processes of controlling the MFA 100 are linked by a folder name.
Especially, the function being executed by the MFA 100 is desirably controlled quickly. The MFA 100 can be variously controlled from the terminal 150 through the network simply by the folder operation on the screen of the terminal 150.
The function of the MFA 100 is desirably the one related to the image. The image-related function is the collective name of the printing function, the scanning function, the copying function and the facsimile function.

The MFA 100 links the ScanPause folder with the pause process for pausing the scanning function under execution. The MFA 100 links the ScanCancel folder with the cancel process for canceling the scanning function under execution. The ScanPause folder and the ScanCancel folder are examples of the second file store region linked to the process of controlling the function under execution.

Specific examples of the invention are explained above and, being only illustrative, not intended to limit the scope of the claims. The technique described in the scope of the claims includes various modifications and alterations of the specific examples described above.
Also, the technical features described in this specification and the accompanying drawings each exhibit the technical significance by itself or by an appropriate combination, and are not limited to the combinations described in the claims at the time of filing an application. Further, the techniques illustrated in this specification and the drawings are intended to achieve plural objects at a time and have a technical significance by achieving any one of the objects.

## Claims

1. A network device (100) to be controlled from a terminal through a network, comprising:
a storage (120) that is arranged to store information of a file store region linked to a function which the device can execute;
a transmitter (122a) that is arranged to transmit the information of the file store region to the terminal based on a file sharing protocol;
a receiver (122a) that is arranged to receive a configuration file and a store command from the terminal based on the file sharing protocol, wherein:
the configuration file describes operating conditions for the function and is directly rewritable by a user; and
the store command designates the file store region and requires the device to store the configuration file in the designated file store region; and
a controller (122b) that is arranged to execute, in response to reception of the store command, the function linked to the designated file store region with the operating conditions described in the received configuration file.

2. The network device (100) as in claim 1, wherein the controller (122b) is arranged to transmit to the terminal a message that indicates an error in the received configuration file when the operating conditions described in the received configuration file fail to suit the function linked to the designated file store region.

3. The network device (100) as in claim 1 or 2, wherein:
the configuration file describes information of a result store region; and
the controller (122b) is arranged to store, in the result store region described in the received configuration file, an execution result of the function linked to the designated file store region.

4. The network device (100) as in one of claims 1 to 3, wherein:
the network device (100) has a scanning function as the function which the device can execute;
the configuration file describes information of a result store region; and
the controller (122b) is arranged to execute the scanning function, in response to reception of the store command, with the operating conditions described in the received configuration file, and stores scanned image data in the result store region described in the received configuration file.

5. The network device (100) as in one of claims 1 to 4, wherein:
the storage (120) is arranged to store an initial configuration file which describes default operating conditions; and
the transmitter (122a) is arranged to transmit the stored initial configuration file to the terminal in response to a request from the terminal.

6. The network device (100) as in claim 1 wherein, the controller (122b) is arranged to save the operating conditions, described in the received configuration file, in a backup file.

7. The network device (100) as in claim 6, wherein:
the storage (120) is arranged to store default operating conditions; and
the controller (122b) is arranged to execute the function with the operating conditions described in the received configuration file and the default operating conditions corresponding to operating condition items which do not exist in the received configuration file; and
the controller (122b) is arranged to save the operating conditions described in the received configuration file and the default operating conditions used in function execution.

8. The network device (100) as in claim 6 or 7, wherein:
the function executed by the device is the one that outputs image data; and
the controller (122b) is arranged to save the operating conditions and the outputted image data in one backup file.

9. The network device (100) as in claim 8, wherein the controller (122b) is arranged to switch, in response to an instruction of a user, between a saving of the operating conditions and the outputted image data in one backup file and a saving of the operating conditions and the outputted image data in different files separately.

10. The network device as in claim 1, wherein:
the storage (120) is arranged to store information of a second file store region linked to a process for controlling the function which the device can execute;
the transmitter (122a) is arranged to transmit the information of the second file store region to the terminal based on the file sharing protocol;
the receiver (122a) is arranged to receive, from the terminal based on the file sharing protocol, an access command which designates the second file store region and requires the device to access the designated second file store region; and
the controller is arranged to control, based on the process linked to the designated second file store region, the function being executed.

11. The network device (100) as in claim 10, wherein:
the process linked to the second file store region is any one of a process for pausing the running function, a process for restarting the paused function, or a process for canceling the running function.

12. The network device (100) as in claim 10 or 11, wherein the second file store region has a name representing the linked process.

13. A network system (10) comprising a network device (100) connected to a network and a terminal (150) that controls the network device through the network, wherein:
the terminal (150) comprises:
a storage (154) that is arranged to store a configuration file which describes operating conditions for a function which the network device can execute, the configuration file being rewritable directly by a user;
an icon displaying means (156b) that is arranged to display, on a screen, a file icon which represents the stored configuration file and a device icon which represents the network device;
a transmitter (156a) that is arranged to transmit, based on a file sharing protocol, the configuration file represented by the file icon to the network device represented by the device icon when a user associates, on the screen, the file icon with the device icon; and
an error displaying means (156b) that is arranged to display, on the screen, an error message which is received from the network device, the device transmits the error message when the device detects an error in the configuration file;
the network device (100) comprising:
a receiver (122a) that is arranged to receive the configuration file transmitted by the terminal based on a file sharing protocol;
a judging means (122b) that is arranged to judge whether the operating conditions described in the received configuration file suit the network device;
a controller (122b) that is arranged to execute the function, wherein:
the controller (122b) executes the function with the operating conditions described in the received configuration file when the judging means judges that the operating conditions described in the received configuration file suit the network device; and
the controller (122b) transmits the error message which indicates an error in the received configuration file when the judging means judges that the operating conditions described in the received configuration file fail to suit the network device.

14. A method for controlling a network device (100) executable of a function from a terminal (150) through the network, comprising:
a step of storing a configuration file which describes operating conditions for a function which the network device can execute, the configuration file being rewritable directly by a user;
a step of displaying a file icon which represents the stored configuration file and a device icon which represents the network device on a screen of the terminal (150);
a step of transmitting, based on a file sharing protocol, the configuration file represented by the file icon to the network device represented by the device icon when a user associates, on the screen, the file icon with the device icon;
a step of receiving the configuration file transmitted by the terminal based on a file sharing protocol;
a step of judging whether the operating conditions described in the received configuration file suit the network device;
a step of executing the function with the operating conditions described in the received configuration file when the judging step judges that the operating conditions described in the received configuration file suit the network device;
a step of transmitting the error message which indicates an error in the received configuration file when the judging step judges that the operating conditions described in the received configuration file fail to suit the network device; and
a step of displaying an error message transmitted from the network device on the screen.
